Europäisches Patentamt

European Patent Office

Office européen des brevets

(19)

(11) Publication number: 0 088 744
A2

## (12) EUROPEAN PATENT APPLICATION

(21) Application number: 83870018.5

(22) Date of filing: 04.03.83

(51) Int. Cl.³: **D 01 D 5/32**

(30) Priority: 08.03.82 US 355958

(43) Date of publication of application: 14.09.83
Bulletin 83/37

(84) Designated Contracting States: **DE FR GB IT**

(71) Applicant: **MONSANTO COMPANY, Patent
Department 800 North Lindbergh Boulevard, St. Louis,
Missouri 63166 (US)**

(72) Inventor: **Bromley, James Ernest, 4305 Roxborough
Place, Pensacola Florida 32504 (US)**
Inventor: **Yu, Jing-Peir, 6541 Scenic Highway, Pensacola
Florida 32504 (US)**

(74) Representative: **McLean, Peter et al, Monsanto Europe
S.A. Patent Department Avenue de
Tervuren 270-272 Letter Box No 1, B-1150 Brussels (BE)**

(54) **Easily splittable conjugate filament.**

(57) An easily splittable conjugate filament is melt-spun by merging molten sub-streams of incompatible polymers outside the spinneret to form a combined stream, then quenching the combined stream to form the conjugate filament.

EP 0 088 744 A2

ACTORUM AG

14-54-8033

-1-

# EASILY SPLITTABLE CONJUGATE FILAMENT
## SPECIFICATION

The invention relates to the art of melt-spinning splittable conjugate filaments.

It is known to spin splittable conjugate filaments by merging side-by-side a plurality of sub-streams of incompatible polymers into a combined or conjugated stream within the spinneret, the combined stream flowing along the spinneret capillary for several thousandths of an inch, e.g., 0.012 inch (0.305 mm.). The combined stream is then quenched to form a spun conjugate filament. The spun conjugate filament is then conventionally drawn or draw-textured. The resulting drawn conjugate filament can be vigorously mechanically worked so as to split the conjugate filament into sub-filaments, each of which is composed of one of the incompatible polymers. The required vigorousness of working of the filament (or, more typically, of a fabric containing the filament) is disadvantageous, both because of the added cost of the step of working the fabric and because of possible damage to the fabric.

According to the invention, these and other disadvantages in the prior art are avoided by a novel modification of the spinning process.

According to a first major aspect, there is provided a process for melt-spinning an easily splittable conjugate filament from first and second incompatible polymers, comprising generating first and second molten sub-streams of the first and second polymers converging to merge side-by-side as a combined stream no sooner than substantially coincident with extrusion from the face of a spinneret; quenching the combined stream to form a conjugate filament; withdrawing the filament from the combined stream at a predetermined spinning speed. According to another aspect of the invention, the sub-streams merge below the face. According to another aspect of the invention, the first sub-stream is a polyamide and the second sub-stream is a polyester. According to another aspect of the invention, the first sub-stream is nylon 66 and the second sub-stream is poly(ethylene terephthalate). According to another aspect of the invention, the sub-streams have substantially the same speed upon extrusion from the face. According to another aspect of the invention, one of the sub-streams has a speed at least twice the speed of the other of the sub-streams. According to another aspect of the invention, the spinning speed is greater than 1000 YPM. According to another aspect of the invention, the spinning speed is greater than 2500 YPM.

According to another major aspect of the invention, there is provided a conjugate filament comprising thermoplastic sub-filaments temporarily adhering side-by-side along the length of the conjugate filament, the adhesion between the sub-filaments being sufficiently light so that the conjugate filament splits substantially completely into the sub-filaments upon exposure to boiling water while under no tension. According to another aspect of the invention, one of the sub-filaments is nylon 66 and the other of the sub-filaments is poly(ethylene terephthalate). According to another aspect of the invention, the filament has a substantially uniform denier along its length. According to another aspect of the invention, the filament has a substantially variable denier along its length.

Other aspects will in part appear hereinafter and will in part be obvious from the following detailed description taken together with the accompanying drawing, wherein:

FIGURE 1 is a vertical sectional view of a first combined orifice according to the invention; and

FIGURE 2 is a vertical sectional view of a second combined orifice according to the invention.

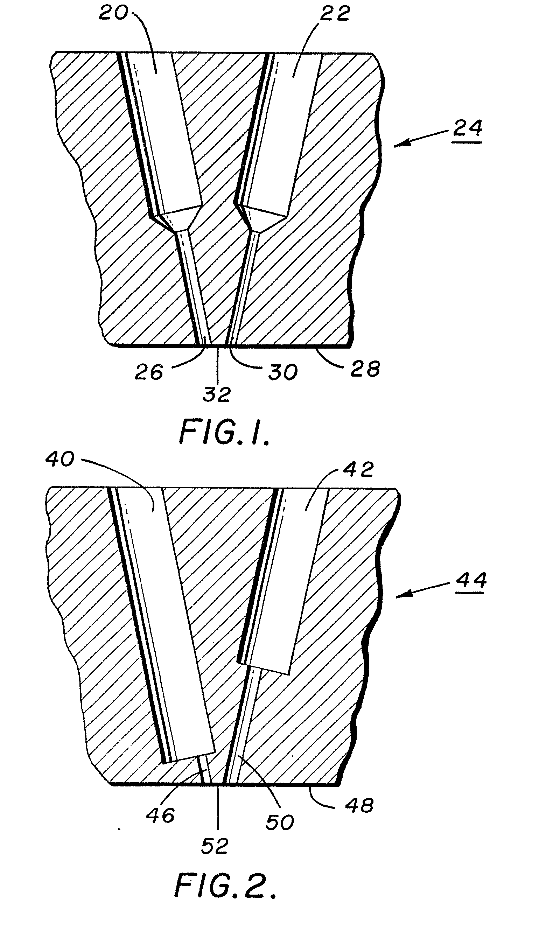

As shown in FIGURE 1, counterbores 20 and 22 are formed in the upper surface of spinneret 24. Capillary 26 extends from the bottom of counterbore 20 to face 28 of spinneret 24, while capillary 30 extends from the bottom of counterbore 22 to face 28. Capillaries 26 and 30 are separated by land 32 on face 28, and their axes form an included angle so that the molten polymer streams metered therethrough converge to merge side-by-side below spinneret face 28 as a combined stream. The combined stream is conventionally quenched (as by transversely moving air) into a conjugate filament which is withdrawn from the combined stream at a predetermined spinning speed, which is the filament speed immediately after solidification. Ordinarily the spinning speed is much higher than the speed of any of molten sub-streams, so that the combined stream is attenuated substantially as it is being quenched. Since the pair of capillaries 26 and 30 cooperate to form a single combined stream, and ultimately a single filament, they are collectively referred to herein as a combined orifice.

<u>EXAMPLE I</u>

A spinneret is provided containing 18 combined orifices, each combined orifice being as disclosed in this example. Thus the spinneret produces 18 conjugate filaments. Within each combined orifice, capillaries 26 and 30 have diameters of 0.009 inch (0.23 mm.) and are 0.1 inch long (2.54 mm.). The axis of each capillary is inclined 12° from the vertical, and thus the axes within a combined orifice form an included angle of 24°. Land 32 separating capillaries 26 and 30 on face 28 has a width of 0.017 inch (0.43 mm.).

While this paragraph for simplicity refers only to spinning of a single filament from a single combined orifice, it will be understood that the same description applies to each of the other combined orifices in the spinneret. Molten nylon 66 polymer of normal molecular weight for apparel end use is metered through counterbore 20 and extruded as a first sub-stream through capillary 26, while molten poly(ethylene terephthalate) polymer of normal molecular weight for apparel end use is metered through counterbore 22 and capillary 30 to form a second sub-stream. The polymer melt temperatures are 285°C. The resulting combined stream is conventionally quenched into a conjugate filament by transversely directed air, and the filament is withdrawn from the combined stream at a spinning speed of 4150 yards per minute (3795 meters per minute). The polymer metering rates are selected such that equal volumes of polymer are extruded through capillaries 26 and 30 per unit of time, and such that the conjugate filament has a denier of 3.87. A conventional spin-finish is applied prior to winding.

The conjugate filaments thus produced according to the invention comprise thermoplastic (nylon and polyester) sub-filaments temporarily adhering side-by-side along the length of the conjugate filaments. The adhesion between sub-filaments is sufficient that the filament (or a yarn comprising a plurality of such filaments) can be handled normally in such operations as texturing, knitting or weaving without difficulty, yet is sufficiently light or weak as to readily be overcome when the conjugate filament is exposed to boiling water, as in the normal scouring and dyeing operations employed in processing of fabrics. Under such conditions, the conjugate filament spontaneously and substantially completely splits into its constituent sub-filaments, thus avoiding the necessity for vigorously working the fabric to achieve splitting as is necessary with prior art splittable conjugate filaments. Ordinarily no added step of working of the fabric is necessary with filaments and yarns according to the present invention.

### EXAMPLE II

In contrast to the constant denier filament produced in Example I, a variable denier filament is readily produced by merging sub-streams extruded at substantially different speeds, producing an oscillation of the sub-streams just below the spinneret. This is preferably done by use of the FIGURE 2 type of combined orifice, wherein counterbores 40 and 42 are formed in the upper surface of spinneret 44. Capillary 46 extends from the bottom of counterbore 42 to face 28. The axes of capillaries 46 and 50 are each inclined $4^{\circ}$ from the vertical. The axes thus form an included angle of $8^{\circ}$, and capillaries 46 and 50 are separated by land 52 on face 28. Capillary 46 has a diameter of 0.009 inch (0.23 mm.) and a length of 0.032 inch (0.81 mm.) while capillary 50 has a diameter of 0.016 inch (0.41 mm.) and a length of 0.146 inch (3.71 mm.). Land 52 has a width of 0.004 inch (0.1 mm.).

The same polymers are used as in Example I above, and the spinneret contains 18 combined orifices as described in the preceding paragraph. The polymer temperatures were each $274^{\circ}$C., with the polyester being extruded through capillaries 46 and the nylon through capillaries 50. The metering rates are selected such that the polyester/nylon ratio is 40/60 by volume, and the resulting 18 filament yarn has a total denier of 40.6. The spinning speed is 3750 YPM, and the molten streams are quenched and finished prior to winding, as in Example I.

The yarn is woven as filling across a conventional warp, then conventionally scoured and dyed at the boil. The filling filaments split substantially completely into their constituent sub-filaments spontaneously upon contact with the boiling water, as do the filaments in Example I above. Yarns according to this example give in fabric form various novelty effects.

The precise reason for the unexpected increased ease of splitting of the filaments of the invention as compared to prior art splittable filaments is unknown.

What is claimed is:

1. A process for melt-spinning an easily splittable conjugate filament from first and second incompatible polymers, comprising:

a. generating first and second molten sub-streams of said first and second polymers converging to merge side-by-side as a combined stream no sooner than substantially coincident with extrusion from the face of a spinneret;

b. quenching said combined stream to form a conjugate filament;

c. withdrawing said filament from said combined stream at a predetermined spinning speed.

2. The process defined in claim 1, wherein said sub-streams merge below said face.

3. The process defined in claims 1 or 2, wherein said first sub-stream is a polyamide and said second sub-stream is a polyester.

4. The process defined in claims 1 or 2, wherein said first sub-stream is nylon 66 and said second sub-stream is poly(ethylene terephthalate).

5. The process defined in claims 1 or 2, wherein said sub-streams have substantially the same speed upon extrusion from said face.

6. The process defined in claims 1 or 2, wherein one of said sub-streams has a speed at least twice the speed of the other of said sub-streams.

7. The process defined in claim 2, wherein said spinning speed is greater than 1000 YPM.

8. The process defined in claim 7, wherein said spinning speed is greater than 2500 YPM.

9. A conjugate filament comprising thermoplastic sub-filaments temporarily adhering side-by-side along the length of said conjugate filament, the adhesion between said sub-filaments being sufficiently light that said conjugate filament splits substantially completely into said sub-filaments upon exposure to boiling water while under no tension.

10. The filament defined in claim 9, wherein one of said sub-filaments is nylon 66 and the other of said sub-filaments is poly(ethylene terephthalate).

11. The filament defined in claim 9, wherein said filament has a substantially uniform denier along its length.

12. The filament defined in claim 9, wherein said filament has a substantially variable denier along its length.

20   22

24

26   30   28

32

FIG.1.

40   42

44

46   50   48

52

FIG.2.